# EUROPÄISCHE PATENTSCHRIFT

(11) **EP 1 428 651 B1**
(45) Veröffentlichungstag und Bekanntmachung des Hinweises auf die Patenterteilung: **05.10.2005**
(21) Anmeldenummer: 02027760.4
(22) Anmeldetag: 11.12.2002
(51) Int. Cl.: B29D 29/08

(54) **Verfahren zur Herstellung eines Antriebsriemens aus elastomerem Werkstoff**
Method of manufacturing a driving belt made of elastomeric material
Procédé pour la fabrication d'une courroie de transmission en élastomère

(43) Veröffentlichungstag der Anmeldung: 16.06.2004
(73) Patentinhaber: ContiTech Antriebssysteme GmbH, 30165 Hannover (DE)
(72) Erfinder: Göser, Hubert, 29451 Dannenberg (DE); Rabe, Friedrich, 31535 Neustadt (DE)
(74) Vertreter: Finger, Karsten

(56) Entgegenhaltungen:
- US-A- 2 983 637
- US-A- 3 138 962
- US-A- 3 200 180
- US-A- 3 418 186
- US-A- 4 053 547
- US-A- 4 066 732

## Beschreibung

Die Erfindung betrifft ein Verfahren zur Herstellung eines Antriebsriemens aus einem im im Wesentlichen unvernetzten oder nicht gehärteten Zustand gießfähigen elastomeren Werkstoff mit einer in einen elastischen Grundkörper eingebetteten Zugträgerlage und mit einer äußeren Armierung, die Fasern enthält, in einer Form aus einem Formkern, einem topfförmigen Formaußenteil und einem dazwischenliegenden, den Riemenrohling formenden Formhohlraum.

Verfahren gemäß der eingangs genannten Art sind z. B. aus der EP-B-0 285 406 bekannt. Bei dem in der EP-B-0 285 406 beschriebenen Verfahren werden Zahnriemen aus Polyurethan hergestellt, die eine Schicht aus hochfestem, nichtgewebtem Fasermaterial und eine Zugträgerlage enthalten. Bei dem Verfahren wird zunächst als Fasermaterial hochfestes Faservlies z. B. aus Polyester auf den Formkern gewickelt, anschließend wird die Zugträgerlage auf das Fasermaterial aufgewickelt und Formkern und Formaußenteil werden zusammengebracht. In den Formhohlraum zwischen Kern und Außenteil wird unterVakuum das Polyurethan in Form einer Präpolymerabmischung (Ausgangsprodukte) injiziert und es wird unterVakuum vernetzt und ausgehärtet. Anschließend wird der Riemenrohling entnommen und in Riemen der gewünschten Breite geschnitten.

Auch in der US 4,053,547 ist ein Verfahren zur Herstellung von Antriebsriemen aus einem im unvernetzten oder nicht gehärteten Zustand gießfähigen elastomeren Werkstoff beschrieben. Es werden Zahnriemen z. B. aus Polyurethan mit einem Gewebe auf den Zähnen hergestellt. Ein dehnbares Gewebe wird zu diesem Zweck auf den Formkern gewickelt und mit Festigkeitsträgern, die entlang der Zähne verlaufen, in die Zahnform des Formkern mit Hilfe der darüber gespulten Zugträgerlage gedrückt. Nach dem Zusammenbringen von Formkern und Formaußenteil wird unter Vakuum und mit Hilfe der Zentrifugalkraft der Formhohlraum mit dem unvernetzten oder nicht gehärteten elastomeren Werkstoff befüllt und der Gesamtverbund unter Vakuum vernetzt und/oder ausgehärtet.

Aus der US 4,066,732 ist ein ähnliches Verfahren beschrieben. Allerdings wird in diesem Fall das Gewebe mit einem Klebstoff am Formkern befestigt.

In der US 3,138,962 und der US 3,200,180 sind Verfahren zur Herstellung von Polyurethanriemen, die keine äußere Armierung aufweisen, beschrieben.

Den vorgenannten Verfahren aus dem Stand der Technik ist gemeinsam, dass der Formhohlraum vor der Einbringung des unvernetzten oder nicht gehärteten elastomeren Werkstoffes zur guten Anbindung des Werkstoffes an die im Riemen vorhandenen Festigkeitsträger und Gewebe und zur Verhinderung von Luft und Flüssigkeitseinschlüssen im Riemen evakuiert wird und der Werkstoff unterVakuum eingefüllt und unter Vakuum zumindest soweit aushärtet, dass die Gesamtform stabil ist.

Trotz Anlegung eines Vakuums verbleiben im gießfähigen Werkstoff und in der Armierung und in den Festigkeitsträgern der Zugträgerlage kleine Luftbläschen, da ein absolutes Vakuum nicht erreicht werden kann. Eine sichere Anbindung der Fasern der Armierung und der Festigkeitsträger an den elastischen Grundkörper ist auf diese Weise nicht immer gewährleistet. Um die Luftbläschen weiter zu verkleinern, kann man zusätzliche Druckkräfte, z. B. durch Einbringung des elastomeren Werkstoffes mit Hilfe von Zentrifugalkräften, wirken lassen.

Der Erfindung liegt nun die Aufgabe zu Grunde, ein weiteres Verfahren zur Herstellung von Antriebsriemen aus einem im unvernetzten oder nicht gehärteten Zustand gießfähigen elastomeren Werkstoff mit einer in den elastischen Grundkörper eingebetteten Zugträgerlage und mit einer äußeren Armierung bereitzustellen, das einfach durchzuführen ist, und welches bewirkt, dass die faserhaltige Armierung und die Festigkeitsträger der Zugträgerlage fest mit dem Riemen verbunden sind und der Riemen möglichst wenige Lufteinschlüsse aufweist.

Gelöst wird die Aufgabe gemäß Anspruch 1 durch ein Verfahren, das zumindest folgende Schritte aufweist:
a) Aufbringung des Materials für die äußere Armierung auf den Formkern,
b) Aufwickeln der Zugträgerlage auf den mit dem Material für die äußere Armierung versehenen Formkern,
c) Positionierung des Formkerns innerhalb des Formaußenteils,
d) Evakuierung der gesamten Form bis zu einem Druck < 0,1 bar in einer Vakuumkammer,
e) Befüllen des Formhohlraumes mit dem unvernetzten oder nicht gehärteten elastomeren Werkstoff oder dessen Ausgangsprodukten,
f) Belüften der Vakuumkammer bis zum Atmosphärendruck solange der elastomere Werkstoff oder dessen Ausgangsprodukte noch eine Viskosität aufweist bzw. aufweisen, die kleiner als 500 Pa*s ist,
g) im Wesentlichen vollständige Vernetzung oder Aushärtung des elastomeren Werkstoffes,
h) Entfernen des Riemenrohlings aus der Form und
i) Schneiden in die gewünschte Riemenbreite.

Der wesentliche Aspekt bei dem erfindungsgemäßen Verfahren ist, dass die Form nach der Anlegung eines Vakuums und dem Einbringen des unvernetzten oder nicht gehärteten elastomeren Werkstoff bzw. von dessen Ausgangsprodukten in den Formhohlraum wieder belüftet wird, bevor der elastomere Werkstoff oder dessen Ausgangsprodukte soweit vernetzt oder ausgehärtet ist bzw. sind, dass er nicht mehr fließfähig ist und eine Viskosität oberhalb von 500 Pa*s aufweist.

Zunächst werden durch die Anlegung des Vakuums (Druck < 0,1 bar) an die Form Feuchtigkeitsreste und die Luft weitestgehend entfernt. Beim Einfüllen des Werkstoffes bzw. der Ausgansprodukte des Werkstoffes entstehen trotzdem kleine Luftbläschen, die sich insbesondere in der äußeren Armierung und in den Festigkeitsträgern als zuletzt mit Werkstoff gefüllte Orte wiederfinden. Diese Luftbläschen weisen einen Innendruck entsprechend des angelegten Vakuums von < 0,1 bar auf. Indem man nun die Form belüftet solange der Werkstoff oder dessen Ausgangprodukte nicht fließfähig und niedrigviskos sind, bewirkt die Druckdifferenz zwischen Atmosphärendruck und dem Druck in den Bläschen, dass die Bläschen in sich zusammenfallen. Auf diese Weise werden auch kleinste Hohlräume und Kapillaren in der Armierung und den Festigkeitsträgern gefüllt und eine hervorragende Anbindung an den elastomeren Werkstoff ist gewährleistet. Zudem ist das Verfahren technisch einfach zu realisieren und kann einfach in vorhandene Prozesstechnik eingebunden werden.

Es ist möglich, dass vor der Positionierung des Formkerns innerhalb des Formaußenteils, das in diesem Fall topfförmig ausgebildet ist, in das topfförmige Formaußenteil der unvernetzte oder nicht gehärtete elastomere Werkstoff oder dessen Ausgangsprodukte gegossen wird bzw. werden, dann der Formkern innerhalb des Formaußenteils über dem Werkstoff oder dessen Ausgangsprodukten positioniert wird und der Formhohlraum nach der Evakuierung durch Einpressen des Formkerns in den Werkstoff mit diesem befüllt wird.

Eine andere Möglichkeit den Formhohlraum mit dem Werkstoff bzw. dessen Ausgangsprodukten zu befüllen, besteht darin, dass die Befüllung durch Injektion in den Formhohlraum vorgenommen wird. Die Befüllung kann durch Einfüllvorrichtungen, z. B. Schläuche oder Stutzen, von oben oder von unten erfolgen.

Der im unvernetzten oder nicht gehärteten Zustand gießfähige elastomere Werkstoff kann auch mit Hilfe von Zentrifugalkräften unter Vakuum in den Formhohlraum eingebracht werden.

Gemäß einer vorteilhaften Weiterbildung der Erfindung kann die im Wesentlichen vollständige Vernetzung und/oder Aushärtung des elastomeren Werkstoffes unter Druck erfolgen. Auf diese Weise werden die vorhandenen Bläschen noch weiter verkleinert. Der Druck kann z. B. durch Anpressen des Formaußenteils, Erhöhung des Luft- oder Gasdruckes in der Form oder durch Rotation der Form und damit Aufbau von Zentrifugalkräften erfolgen. Bei der Rotation der Form muss allerdings die Form entsprechend gelagert sein.

Es ist auch von Vorteil, wenn die im Wesentlichen vollständige Vernetzung und/oder Aushärtung des elastomeren Werkstoffes unter erhöhter Temperatur erfolgt. Aushärtung und/oder Vernetzung werden auf diese Weise beschleunigt und der Fertigungsprozess wird abgekürzt.

Das erfindungsgemäße Verfahren kann für die Herstellung unterschiedlichster Antriebsriemen verwendet werden. Besonders bevorzugt wird das Verfahren aber bei der Herstellung von Zahnriemen eingesetzt, da bei diesem Riementyp die Aufbringung und feste, blasenfreie Anbindung einer äußeren Armierung mit herkömmlichen Verfahren schwierig zu bewerkstelligen ist. Zusätzlich ist bei Zahnriemen eine vollständige Ausfüllung der Form und eine exakte Ausfüllung der Zähne mit elastomerem Werkstoff von großer Wichtigkeit, damit es im Einsatz nicht zu Ausfällen des Riemens kommt.

Als gießfähiger elastomerer Werkstoff können verschiedenste Materialien, z. B. flüssige Kautschukmischungen (flüssiges Polychloropren), Silikone oder polyesterbasierende Harze verwendet werden, die sich nach Vernetzung oder Härtung im Gebrauchstemperaturbereich elastisch verhalten. Bevorzugt wird das Verfahren aber für die Herstellung von Riemen aus Polyurethan eingesetzt. Es werden dann Prepolymere (Präpolymere) des Polyurethans gemischt mit Vernetzer in den Formhohlraum eingefüllt, die zu Polyurethan vernetzen und aushärten. Riemen aus Polyurethan bieten sehr gute mechanische Eigenschaften im Hinblick auf Festigkeit und Flexibilität und weisen eine gute Beständigkeit gegen äußere Einflüsse, wie z. B. UV-Licht und Feuchtigkeit, auf.

Bei der äußeren Armierung, die die Zähne vor Abrieb schützt und den Reibbeiwert senkt, kann es sich um ein Gewebe, z. B. ein Nylongewebe, handeln, das vor der Zugträgerlage auf den Formkern aufgebracht und gegebenenfalls geklebt wird. Das erfindungsgemäße Verfahren bewirkt, dass der elastomere Werkstoff jede Faser oder jedes Faserbündel des Gewebes nahezu vollständig durchdringt und damit eine besonders feste Bindung zwischen Gewebe und elastomerem Werkstoff gewährleistet wird.

Das Material für die äußere Armierung kann aber auch ein Flockmaterial sein, welches mit Hilfe eines als Klebstoff wirkenden Mittels vor dem Aufwickeln der Zugträgerlage auf den Formkern aufgebracht wird. Nach dem Belüften der Form entsteht durch das Vakuum in der Faserschicht ein Unterdruck, der dazu führt, dass der elastomere Werkstoff zwischen die Fasern fließt. Nach der Vernetzung und/oder der Aushärtung ist dadurch eine optimale Anbindung der Faserschicht an das Material des Grundkörpers erreicht. Bei dem Verfahren wird der Formkern mit einem Klebstoff und mit Fasern durch Beflockung versehen. Der Klebstoff kann dabei vor und/oder nach der Aufbringung der Fasern auf die Form z. B. durch Sprühen, Streichen oder Tauchen aufgebracht werden. Es können auch mehrere Lagen an Fasern und Klebstoff in unterschiedlichen Reihenfolgen aufgebracht werden, wobei für jede Lage auch unterschiedliche Fasern und unterschiedliche Klebstoffe verwendet werden können. Nachdem der Formkern mit den Fasern und dem Klebstoff versehen worden ist, wird auf den Kern die Zugträgerlage aufgespult.

Als Klebstoff kann z. B. ein zu Polyurethan aushärtendes System aus Polyol und Polyisocyanat (Prepolymere des Polyurethans) verwendet werden, dem noch andere Zuschlagstoffe beigefügt sein können.

Als Flockmaterial können Fasern aus Baumwolle, Polyester, Polypropylen oder aus anderen in der Riemenfertigung gebräuchlichen Materialien verwendet werden. Bevorzugt werden allerdings Polyamidfasern eingesetzt, mit denen eine besonders gute Reibwertreduzierung und ein besonders hoher Abriebwiderstand erreicht werden können.

Im Folgenden wird die Erfindung anhand eines Ausführungsbeispiels im Zusammenhang mit den nachstehenden Figuren näher erläutert, ohne jedoch auf diese Beispiele beschränkt zu sein.

Dabei zeigen:
- Figuren 1a bis 1f: schematisch das Versehen des Formkerns mit Armierungsmaterial und Zugträgerlage
- Figur 2: schematisch weitere Schritte des Verfahrens
- Figur 3: schematisch den Schnitt durch einen nach dem erfindungsgemäßen Verfahren hergestellten Zahnriemen in Umlaufrichtung.

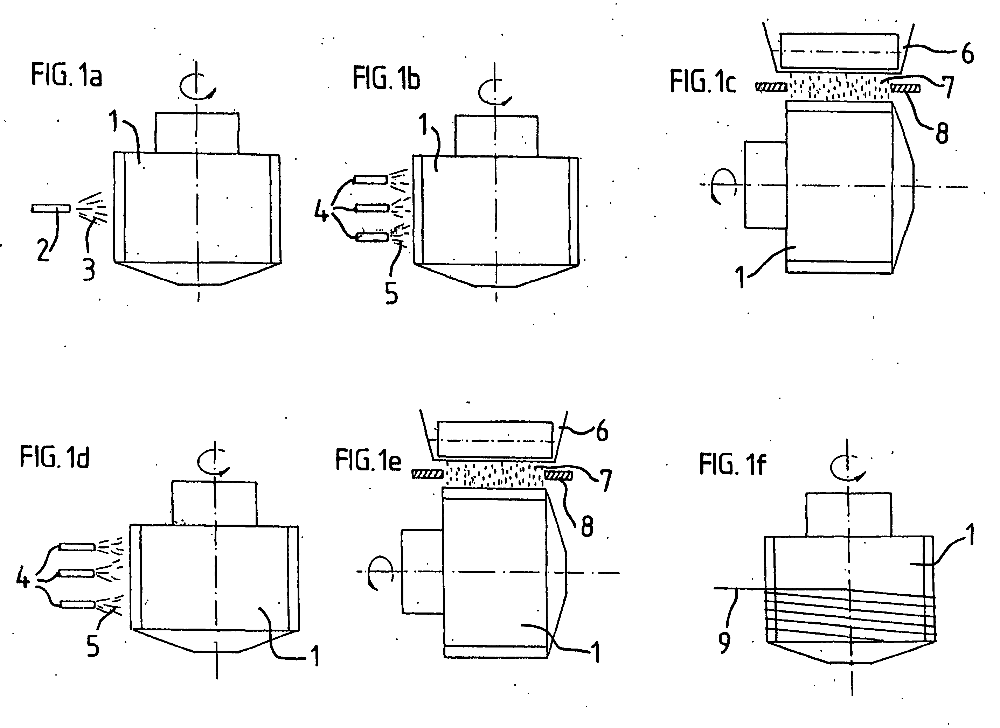

In der Figur 1a ist dargestellt, wie auf einen sich drehenden Formkern 1 für die Herstellung eines Zahnriemens aus einem im unvernetzten oder nicht gehärteten Zustand gießfähigen elastomeren Werkstoff ein Formtrennmittel 3 mit einer Sprühvorrichtung 2 aufgebracht wird. In der Figur 1b wird der mit Formtrennmittel 3 versehene Formkern 1 mittels der Sprühvorrichtungen 4 unter Drehen mit einem Klebstoff 5 versehen. Im Anschluss wird der Formkern 1, wie in Figur 1c dargestellt, mit Fasern 7 eines Flockmaterials aus einem Vorratsgefäß 6 bestreut, wobei die Fasern 7 durch Mittel 8 zur Erzeugung eines elektrostatischen Feldes ausgerichtet und beschleunigt werden können. Der beflockte Formkern 1 wird in Figur 1d erneut mit einem Klebstoff 5 aus der Sprüchvorrichtung 4 besprüht und Figur 1e zeigt die Aufbringung einer zweiten Schicht mit Flockmaterial. In Figur 1f wird auf den mit dem Material für die äußere Armierung versehen Formkern 1 der Festigkeitsträger 9 für die Zugträgerlage aufgewickelt.

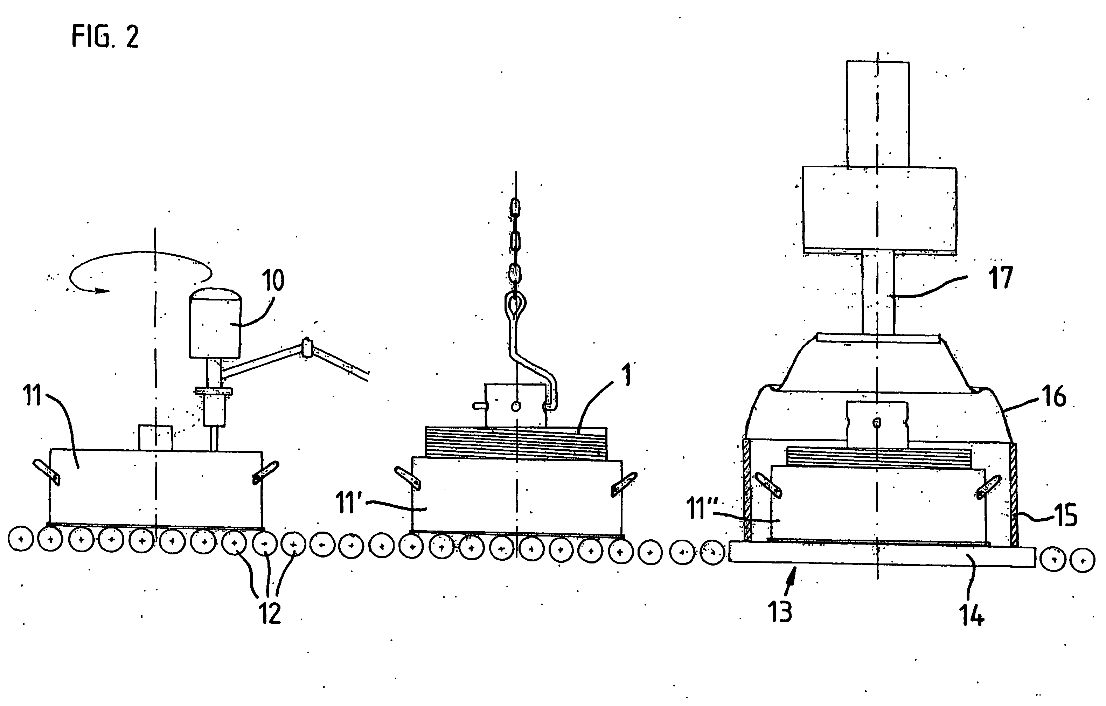

In Figur 2 ist dargestellt, wie über eine Zuführvorrichtung 10 der unvernetzte oder nicht gehärtete elastomere Werkstoff oder dessen Ausgangsprodukte in das topfförmige Formaußenteil 11 gegossen wird bzw. werden. Die befüllten Formaußenteile 11, 11', 11" werden entlang eines Rollenförderers 12 weiter transportiert. Im mittleren Abschnitt der Figur 2 wird in einem mit Werkstoff befüllten Formaußenteil 11' der gemäß den Figuren 1a bis 1f behandelte Formkern 1 positioniert und über dem Werkstoff gehalten. Im weiteren Verlauf wird die Form aus Formaußenteil 11" und Formkern 1' in eine Vakuumkammer 13 aus einem Boden 14, einem festen Ring 15 aus Metall, einer flexiblen, gasdichten Membran 16 und mit einem oberhalb des Formkerns 1' angeordneten Stempel 17 überführt. Im Anschluss wird die Vakuumkammer 13 bis zu einem Druck < 0,1 bar evakuiert, dann wird der Formkern 1' mit Hilfe des Stempels 17 so weit heruntergedrückt, dass der unvernetzte oder nicht gehärtete elastomere Werkstoff oder dessen Ausgangsprodukte vom Boden des Formaußenteils 11" in den Formhohlraum zwischen Formkern 1' und Formaußenteil 11" gedrückt wird und diesen vollständig ausfüllt. Solange der elastomere Werkstoff oder dessen Ausgangsprodukte noch fließfähig ist bzw. sind wird die Vakuumkammer 13 wieder bis zum Atmosphärendruck gelüftet, so dass die eingeschlossenen Luftbläschen, die einen Druck von ca. 0,1 bar aufwiesen durch den Außendruck zusammengepresst werden und in sich zusammenfallen. Lufteinschlüsse auch innerhalb des Armierungsmaterials und zwischen den Fasern 7 werden auf diese Weise minimiert und eine sehr gute Anbindung der Fasern 7 an das übrige Riemenmaterial wird gewährleistet.

Nachdem der Werkstoff unter Atmosphärendruck im Wesentlichen vollständig vernetzt oder ausgehärtet ist, wird der Rohling der Form entnommen und in Zahnriemen der gewünschten Breite geschnitten.

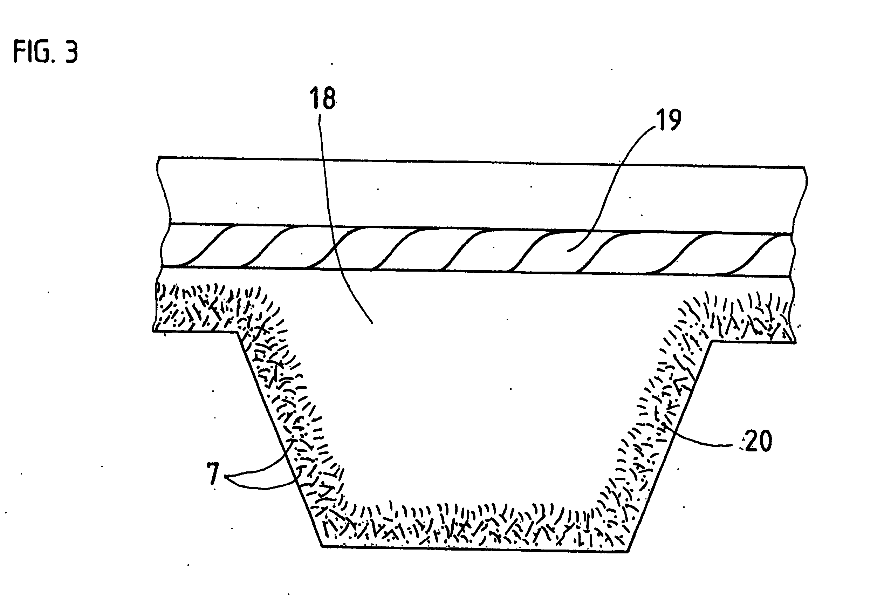

In Figur 3 ist ein nach dem erfindungsgemäßen Verfahren hergstellter Zahnriemen im Längsschnitt (Schnitt in Umlaufrichtung) dargestellt. Der Zahnriemen weist einen elastischen Grundkörper 18, eine Zugträgerlage 19 und eine äußere Armierung enthaltend Fasern 7 auf. Der Zahnriemen besteht aus Polyurethan, wobei als Klebstoff 5 für die Befestigung der Fasern 7 ebenfalls ein zu Polyurethan vernetzendes System, welches zusätzlich einen Füllstoff 20 enthielt, verwendet wurde.

### Bezugszeichenliste (ist Teil der Beschreibung)

- 1: Formkern
- 2: Sprühvorrichtung
- 3: Formtrennmittel
- 4: Sprühvorrichtung
- 5: Klebstoff
- 6: Vorratsgefäß
- 7: Fasern
- 8: Mittel zur Erzeugung eines elektrostatischen Feldes
- 9: Festigkeitsträger für Zugträgerlage
- 10: Zuführvorrichtung
- 11: Formaußenteil
- 12: Rollenförderer
- 13: Vakuumkammer
- 14: Boden der Vakuumkammer
- 15: fester Ring
- 16: flexible Membran
- 17: Stempel
- 18: Grundkörper
- 19: Zugträgerlage
- 20: Füllstoff

## Patentansprüche

1. Verfahren zur Herstellung eines Antriebsriemens aus einem im im Wesentlichen unvernetzten oder nicht gehärteten Zustand gießfähigen elastomeren Werkstoff mit einer in einen elastischen Grundkörper (18) eingebetteten Zugträgerlage (19) und mit einer äußeren Armierung, die Fasern (7) enthält, in einer Form aus einem Formkern (1, 1'), einem Formaußenteil (11, 11', 11") und einem dazwischenliegenden, den Riemenrohling formenden Formhohlraum,
aufweisend zumindest folgende Schritte:
a) Aufbringung des Materials für die äußere Armierung auf den Formkern (1, 1'),
b) Aufwickeln der Zugträgerlage (19) auf den mit dem Material für die äußere Armierung versehenen Formkern (1, 1'),
c) Positionierung des Formkerns (1, 1') innerhalb des Formaußenteils (11, 11', 11"),
d) Evakuierung der gesamten Form bis zu einem Druck < 0,1 bar in einer Vakuumkammer (13),
e) Befüllen des Formhohlraumes mit dem unvernetzten oder nicht gehärteten elastomeren Werkstoff oder dessen Ausgangsprodukten,
f) Belüften der Vakuumkammer (13) bis zum Atmosphärendruck solange der elastomere Werkstoff oder dessen Ausgangsprodukte noch eine Viskosität aufweist bzw. weisen, die kleiner als 500 Pa*s ist,
g) im Wesentlichen vollständige Vernetzung oder Aushärtung des elastomeren Werkstoffes,
h) Entfernen des Riemenrohlings aus der Form und
i) Schneiden in die gewünschte Riemenbreite.

2. Verfahren nach Anspruch 1, **dadurch gekennzeichnet, dass** vor der Positionierung des Formkerns (1, 1') innerhalb des Formaußenteils (11, 11', 11"), das topfförmig ausgebildet ist, in das topfförmige Formaußenteil (11, 11', 11") der unvernetzte oder nicht gehärtete elastomere Werkstoff oder dessen Ausgangsprodukte gegossen wird bzw. werden, dann der Formkern (1, 1') innerhalb des Formaußenteils (11, 11', 11") über dem Werkstoff oder dessen Ausgangsprodukten positioniert wird und der Formhohlraum nach der Evakuierung durch Einpressen des Formkerns (1, 1') in den Werkstoff mit diesem befüllt wird.

3. Verfahren nach Anspruch 1, **dadurch gekennzeichnet, dass** der Formhohlraum durch Injektion des unvernetzten oder nicht gehärteten elastomeren Werkstoffes oder dessen Ausgangsprodukten mit diesem bzw. diesen befüllt wird.

4. Verfahren nach zumindest einem der vorhergehenden Ansprüche, **dadurch gekennzeichnet, dass** die im Wesentlichen vollständige Vernetzung und/oder Aushärtung des elastomeren Werkstoffes unter Druck erfolgt.

5. Verfahren nach zumindest einem der vorhergehenden Ansprüche, **dadurch gekennzeichnet, dass** die im Wesentlichen vollständige Vernetzung und/oder Aushärtung des elastomeren Werkstoffes bei erhöhter Temperatur erfolgt.

6. Verfahren nach zumindest einem der vorhergehenden Ansprüche, **dadurch gekennzeichnet, dass** der Antriebsriemen ein Zahnriemen ist.

7. Verfahren nach zumindest einem der vorhergehenden Ansprüche, **dadurch gekennzeichnet, dass** der elastomere Werkstoff Polyurethan ist.

8. Verfahren nach zumindest einem der vorhergehenden Ansprüche, **dadurch gekennzeichnet, dass** das Material für die äußere Armierung ein Gewebe ist.

9. Verfahren nach zumindest einem der Ansprüche 1 bis 7, **dadurch gekennzeichnet, dass** das Material für die äußere Armierung ein Flockmaterial ist, welches mit Hilfe eines als Klebstoff (5) wirkenden Mittels vor dem Aufwickeln der Zugträgerlage (16) auf den Formkern (1, 1') aufgebracht wird.

## Claims

1. Method of manufacturing a driving belt made of an elastomeric material which is pourable in the essentially uncrosslinked or nonhardened state, with a tensionable layer (19) embedded in an elastic base member (18) and with an outer reinforcement, which contains fibres (7), in a mould comprising a mould core (1, 1'), an outer mould part (11, 11', 11'') and a mould cavity lying in between, forming the belt blank,
having at least the following steps:
a) applying the material for the outer reinforcement to the mould core (1, 1'),
b) winding the tensionable layer (19) onto the mould core (1, 1') provided with the material for the outer reinforcement,
c) positioning the mould core (1, 1') inside the outer mould part (11, 11', 11''),
d) evacuating the entire mould down to a pressure of < 0.1 bar in a vacuum chamber (13),
e) filling the mould cavity with the uncrosslinked or nonhardened elastomeric material or its starting products,
f) admitting air to the vacuum chamber (13) up to atmospheric pressure as long as the elastomeric material or its starting products still has or have a viscosity which is lower than 500 Pa*s,
g) essentially complete crosslinking or hardening of the elastomeric material,
h) removing the belt blank from the mould and
i) cutting it to the desired belt width.

2. Method according to Claim 1, **characterized in that**, before the positioning of the mould core (1, 1') inside the outer mould part (11, 11', 11''), which is of a cup-shaped form, the uncrosslinked or nonhardened elastomeric material or its starting products is or are poured into the cup-shaped outer mould part (11, 11', 11''), then the mould core (1, 1') is positioned inside the outer mould part (11, 11', 11'') over the material or its starting products and, after the evacuation, the mould cavity is filled with the material by pressing the mould core (1, 1') into the said material.

3. Method according to Claim 1, **characterized in that** the mould cavity is filled with the uncrosslinked or nonhardened elastomeric material or its starting products by injecting it or them.

4. Method according to at least one of the preceding claims,- **characterized in that** the essentially complete crosslinking and/or hardening of the elastomeric material takes place under pressure.

5. Method according to at least one of the preceding claims, **characterized in that** the essentially complete crosslinking and/or hardening of the elastomeric material takes place at an elevated temperature.

6. Method according to at least one of the preceding claims, **characterized in that** the driving belt is a toothed belt.

7. Method according to at least one of the preceding claims, **characterized in that** the elastomeric material is polyurethane.

8. Method according to at least one of the preceding claims, **characterized in that** the material for the outer reinforcement is a woven fabric.

9. Method according to at least one of Claims 1 to 7, **characterized in that** the material for the outer reinforcement is a flock material, which is applied to the mould core (1, 1') with the aid of an agent acting as an adhesive (5) before the winding on of the tensionable layer (16).

## Revendications

1. Procédé de fabrication d'une courroie d'entraînement en un matériau élastomère essentiellement non réticulé apte à s'écouler à l'état non durci, avec une couche (19) de support de traction incorporée dans un corps élastique de base (18) et une armature extérieure qui contient des fibres (7), dans un moule constitué d'une âme de moule (1, 1'), d'une partie extérieure de moule (11, 11', 11'') et d'un espace creux de moule situé entre l'âme et la pièce extérieure et qui moule l'ébauche de courroie, lequel procédé présente au moins les étapes ci-dessous :
a) application sur l'âme de moule (1, 1') du matériau prévu pour l'armature extérieure,
b) enroulement de la couche (19) de support de traction sur l'âme de moule (1, 1') dotée du matériau prévu pour l'armature extérieure,
c) positionnement de l'âme de moule (1, 1') à l'intérieur de la pièce extérieure de moule (11, 11', 11''),
d) mise sous vide de l'ensemble de moule jusqu'à une pression < 0,1 bar dans une chambre sous vide (13),
e) remplissage de l'espace creux du moule par le matériau élastomère non réticulé ou non durci ou par ses produits de départ,
f) mise de la chambre sous vide (13) à une pression qui peut atteindre la pression atmosphérique tant que le matériau élastomère ou ses produits de départ présentent encore une viscosité inférieure à 500 Pa.s,
g) réticulation ou durcissement essentiellement complets du matériau élastomère,
h) enlèvement de l'ébauche de courroie hors du moule et
i) découpe à la largeur de courroie souhaitée.

2. Procédé selon la revendication 1, **caractérisé en ce qu'**avant de placer l'âme de moule (1, 1') à l'intérieur de la pièce extérieure de moule (11, 11', 11'') configurée en forme de pot, le matériau élastomère non réticulé ou non durci ou ses produits de départ sont coulés dans la pièce extérieure (11, 11', 11'') en forme de pot, l'âme de moule (1, 1') étant alors placée à l'intérieur de la pièce extérieure de moule (11, 11', 11'') au-dessus du matériau ou de ses produits de départ, et après mise sous vide, l'espace creux de moule est rempli du matériau en enfonçant l'âme de moule (1, 1') dans le matériau.

3. Procédé selon la revendication 1, **caractérisé en ce que** l'espace creux de moule est rempli par injection du matériau élastomère non réticulé ou non durci ou par ses produits de départ.

4. Procédé selon au moins l'une des revendications précédentes, **caractérisé en ce que** la réticulation et/ou le durcissement essentiellement complets du matériau élastomère s'effectuent sous pression.

5. Procédé selon au moins l'une des revendications précédentes, **caractérisé en ce que** la réticulation et/ou le durcissement essentiellement complets du matériau élastomère ont lieu à haute température.

6. Procédé selon au moins l'une des revendications précédentes, **caractérisé en ce que** la courroie d'entraînement est une courroie crantée.

7. Procédé selon au moins l'une des revendications précédentes, **caractérisé en ce que** le matériau élastomère est le polyuréthane.

8. Procédé selon au moins l'une des revendications précédentes, **caractérisé en ce que** le matériau de l'armature extérieure est un tissu.

9. Procédé selon au moins l'une des revendications 1 à 7, **caractérisé en ce que** le matériau pour l'armature extérieure est un matériau floqué qui est appliqué sur l'âme de moule (1, 1') à l'aide d'un agent qui joue le rôle d'un adhésif (5), et ce avant l'enroulement de la couche (16) de support de traction.
